# EUROPEAN PATENT APPLICATION

(11) **EP 1 346 716 A1**
(43) Date of publication of application: **24.09.2003**
(21) Application number: 02802693.8
(22) Date of filing: 22.05.2002
(51) Int. Cl.: A61J 1/05

(54) **LEAK STOP PLUG AGAINST NEEDLE PIERCING AND METHOD OF MANUFACTURING THE LEAK STOP PLUG**

(30) Priority: 09.11.2001 JP 2001344260
(71) Applicant: Taisei Plas Co., Ltd., Chuo-ku, Tokyo 103-0007 (JP)
(72) Inventor: NARITOMI, Masanori, c/o TAISEI PLAS CO., LTD, Tokyo 103-0023 (JP); SHRAISHI, Masao, c/o TAISEI PLAS CO., LTD, Tokyo 103-0023 (JP); TAKAHASHI, Masao, c/o TAISEI PLAS CO., LTD, Tokyo 103-0023 (JP)
(74) Representative: TER MEER STEINMEISTER & PARTNER GbR
(86) International application number: JP0204928
(87) International publication number: WO03039432

(57) **Abstract**

A pierceable stopper enhanced in elasticity so that the liquid in a container will not leak even after a hollow needle inserted into the container through the pierceable stopper has been removed therefrom and a method of producing the pierceable stopper are provided. A pierceable part (11) through which a hollow needle is inserted into a container (2) is molded from a thermoplastic synthetic resin elastic material. The pierceable part is heat-treated with heated air at a temperature of from 80 to 120°C to remove the internal stress. The heat-treated pierceable part (11) is inserted into an injection mold (20, 21). A molten thermoplastic synthetic resin is injected into a cavity (26) corresponding to a stopper body (10), which is defined by the injection mold (20, 21) and the pierceable part (11), to form a pierceable stopper (5).

## Description

### Technical Field:

The present invention relates to a pierceable stopper used for a liquid container into which a hollow needle can be externally inserted through the pierceable stopper, and also relates to a method of producing the pierceable stopper. More particularly, the present invention relates to a pierceable stopper for a medical liquid bottle, bag or the like filled with a liquid for medical treatment. The pierceable stopper is made of a thermoplastic synthetic resin elastic material and a thermoplastic synthetic resin material and has a pierceable part enhanced in elasticity so that it is readily pierceable with a hollow needle for injection or intravenous drip infusion, and yet there is no leakage of medical liquid. The present invention also relates to a method of producing the above-described pierceable stopper.

### Background Art:

Capsules filled with medical liquids for injection and bottles or bags filled with medical liquids for intravenous drip infusion are preferably designed so that the medical liquids therein can be taken out or a liquid can be injected thereinto without removing the caps or stoppers therefrom. Therefore, the caps and stoppers are arranged so that even when they are pierced with a hollow needle for injection or intravenous drip infusion and the needle is temporarily pulled out, the liquids in the containers cannot spill out, and, at the same time, foreign matter, e.g. air, in the hospital cannot enter the containers. Such stoppers are desirably mass-produced and reduced in cost so as to be used by an increased number of people.

Conventionally, vulcanized rubber is used as a material for such a stopper. However, the stopper using vulcanized rubber involves such a danger that an additive, a polymerization solvent, etc. in the vulcanized rubber may flow out into the medical liquid in the container, or rubber chippings cut by a hollow needle for injection or the like may get mixed in the medical liquid. Accordingly, a stopper using a thermoplastic synthetic resin elastic material ("elastic material" will hereinafter occasionally be referred to as "elastomer") has been proposed [Japanese Patent Application Unexamined Publication (KOKAI) No. Hei 9-173417].

The inventors of the present invention also proposed a technique in Japanese Patent No. 3142521, Japanese Patent Application Unexamined Publication (KOKAI) No. 2001-258991, etc., wherein the pierceable part of a pierceable stopper is made by using a thermoplastic synthetic resin elastic material lower in elasticity than rubber to prevent leakage of liquid from the container after the removal of the inserted needle. In the conventional pierceable stoppers, however, the strain during molding carried out when they are produced remains in the pierceable parts as residual stress, and this exceeds the elastic limit. Consequently, elastic recovery force becomes unfavorably weak. If a material exhibiting high elasticity is used to solve this problem, the pierceable stopper becomes difficult to use because the pierceable part is hard and offers a high resistance to a hollow needle when stuck thereinto.

There has also been proposed a stopper comprising two layers of thermoplastic synthetic resin elastomers. However, satisfactory effect cannot be obtained with this stopper because there may be a little leakage of medical liquid when the piercing conditions are severe. Thus, the user is not always satisfied with this stopper. Accordingly, there has been a demand for a further improved pierceable stopper.

The present invention was made to solve the above-described problems and to improve the above-described technique disclosed in Japanese Patent No. 3142521 and Japanese Patent Application Unexamined Publication (KOKAI) No. 2001-258991 by the inventors of the present invention, thus attaining the following objects.

An object of the present invention is to provide a pierceable stopper in which a pierceable part is previously heat-treated after it has been molded, that is, the residual stress in the pierceable part is resolved previously, thereby enhancing elasticity. Thereafter, a thermoplastic synthetic resin material is injection-molded, thereby allowing the pierceable part to recover by the elasticity after the removal of the inserted needle, and thus preventing leakage of liquid from the container. Another object of the present invention is to provide a method of producing the above-described pierceable stopper.

Still another object of the present invention is to provide a pierceable stopper that can be produced at a reduced cost, and to provide a method of producing the pierceable stopper.

The advantage of the pierceable stopper according to the present invention is as follows. In the pierceable stopper, the pierceable part, which is pierceable with a hollow needle, is formed by using a thermoplastic synthetic resin elastic material treated to resolve the residual stress (internal stress). Accordingly, there is no leakage of liquid from the container when the pierceable part is pierced with a hollow needle or after the needle has been pulled out. Thus, there is no possibility of the medical liquid splashing over the surroundings.

### Disclosure of the Invention:

To attain the above-described objects, the present invention provides the following means: A pierceable stopper according to the present invention has a pierceable part pierceable with a hollow needle. The pierceable part is formed by using a thermoplastic synthetic resin elastic material as a base polymer. The thermoplastic synthetic resin elastic material is a styrene elastomer consisting essentially of a hydrogenated product of a styrene-conjugated diene block copolymer having a weight-average molecular weight not less than 150,000, wherein the conjugated diene is at least one selected from isoprene and butadiene. The pierceable part has a hardness in the range of from 20 to 80 in terms of JIS(A) hardness and a thickness in the range of from 2 millimeters to 8 millimeters.

The pierceable stopper further has a stopper body formed from a thermoplastic synthetic resin having a higher rigidity than that of the material of the pierceable part. The stopper body has an outer peripheral portion for preventing a stress from propagating to the outside when the pierceable part is pierced with the hollow needle and for defining the pierceable part.

Further, the pierceable stopper has a thermowelded joint at which the pierceable part and the stopper body are thermowelded together.

The pierceable part, which has been molded, is heated to perform a heat treatment for removing an internal stress. The heat-treated pierceable part is inserted into an injection mold, and a melt of the thermoplastic synthetic resin is injected into a cavity defined by the injection mold and the pierceable part at an injection pressure not lower than 59 MPa to mold the stopper body. Further, the pierceable part and the stopper body are thermowelded together in the injection mold to form the thermowelded joint.

### [Thermoplastic Synthetic Resin Elastic Material for Pierceable Part]

The thermoplastic synthetic resin elastic material used as a base polymer to form the pierceable part is a styrene elastomer consisting essentially of a hydrogenated product of a styrene-conjugated diene block copolymer having a weight-average molecular weight of from 270,000 to 400,000, wherein the conjugated diene is at least one selected from isoprene and butadiene.

Judging from the viewpoint of moldability, external appearance and so forth, however, the thermoplastic synthetic resin elastic material is a styrene elastomer having a weight-average molecular weight of from 270,000 to 400,000. The molecular weight of this elastomer is considerably high in view of the fact that the molecular weight of styrene elastomers generally used for other use applications is of the order of from 70,000 to 120,000.

Styrene polymers applicable to the present invention consist essentially of a hydrogenated product of a styrene-conjugated diene block copolymer, wherein the conjugated diene is a polymer block comprising either butadiene or isoprene alone or a mixture of isoprene and butadiene.

Specific examples of hydrogenated styrene-conjugated diene block copolymers usable in the present invention are hydrogenated styrene-butadiene-styrene (SEBS) block copolymers, hydrogenated styrene-isoprene-styrene (SEPS) block copolymers, and hydrogenated styrene-isoprene-butadiene-styrene (SEEPS) block copolymers. These polymer blocks may be used alone or in the form of a mixture of two or more of them. The use of a hydrogenated SEEPS block copolymer for forming the pierceable part in the present invention is particularly effective because the molecular weight of the base polymer can be designed to be large in comparison to hydrogenated SEBS and SEPS block copolymers.

When a mixture of isoprene and butadiene is used as the conjugated diene, the mixing weight ratio (isoprene/butadiene) is from (99/1) to (1/99), preferably from (90/10) to (65/35). It is important to use a hydrogenated styrene-conjugated diene block copolymer having a styrene content of from 5 to 50% by weight, preferably from 8 to 45% by weight, particularly preferably from 10 to 40% by weight, a 1,2-micro structure of less than 20%, preferably less than 15%, and a hydrogenation ratio of not less than 85%, preferably from 97 to 100%.

The weight-average molecular weight of a thermoplastic synthetic resin elastic material used in the present invention is measured by GPC (Gel Permeation Chromatography) and expressed in terms of polystyrene weight-average molecular weight as measured under the conditions shown below. Specific measuring conditions are as follows.

### (Average molecular weight measuring conditions)

- Equipment:: 150C ALC/GPC (available from MILLIPORE, U.S.A.)
- Columns:: ADM/S (available from Showa Denko, Japan) 3 columns
- Solvent:: o-dichlorobenzene
- Temperature:: 140°C
- Flow velocity:: 1 m*l*/min.
- Injected quantity:: 200 µ*l*
- Concentration:: 2 mg/m*l*
[antioxidant 2,6-di-t-butyl-p-phenol was added in an amount of 0.2% by weight.
Concentration was measured at a wavelength of 3.42 µm with an infrared spectrophotometer "MIRAN 1A" (trademark), available from FOXBORO (U.S.A.)]

It is desirable that the readily deflectable portion should be formed by deflecting the pierceable part in the direction of penetration of the hollow needle during the process of molding the stopper body. The hardness of the pierceable part should preferably be selected within the range of from 20 to 70 in terms of JIS(A) hardness (durometer hardness). It is preferable that the hardness of the pierceable part should be within the range of from 45 to 65 in terms of JIS(A) hardness of the measured value obtained with a durometer of the type A defined by JIS K6253.

It is particularly preferable that the pierceable part should be formed from a mixture of the above-described SEEPS block copolymer, a paraffin oil, and a polyolefin resin from the viewpoint of hardness, compatibility and so forth.

### [Structure of Pierceable Part]

The pierceable part should preferably be formed from the above-described styrene elastomer. It is preferable that the stopper body should be formed from a thermoplastic synthetic resin and thermowelded to the pierceable part. The thermowelding process may be ultrasonic welding whereby different kinds of plastic materials are welded together by ultrasonic vibration. It is preferable that the stopper body should be welded to the pierceable part under pressure in an ultrasonic injection mold. The thickness of the readily deflectable portion is desirably in the range of from 1 to 10 millimeters, more desirably in the range of from 2 to 5 millimeters. The hardness, thickness and other structural requirements demanded for the pierceable part are substantially the same as in the publicly known technique disclosed in Japanese Patent No. 3142521.

### [Heat Treatment]

The heat treatment applied to the pierceable part is a treatment for removing the internal stress. The heat treatment is characterized by being carried out for a period of time in the range of from 30 minutes to 12 hours by using heated air at a temperature of from 80 to 120°C. It is also possible to obtain favorable effects by carrying out the heat treatment at a temperature of 100 to 120°C for 1 to 2 hours. The heat treatment may be performed in a heated liquid in place of heated air.

### [Method of Producing Pierceable Stopper]

In addition, the present invention provides a method of producing a pierceable stopper having a pierceable part pierceable with a hollow needle. The pierceable part is formed by using a thermoplastic synthetic resin elastic material as a base polymer. The thermoplastic synthetic resin elastic material is a styrene elastomer consisting essentially of a hydrogenated product of a styrene-conjugated diene block copolymer having a weight-average molecular weight not less than 150,000, wherein the conjugated diene is at least one selected from isoprene and butadiene. The pierceable part has a hardness in the range of from 20 to 80 in terms of JIS(A) hardness and a thickness in the range of from 2 millimeters to 8 millimeters. The pierceable stopper further has a stopper body formed from a thermoplastic synthetic resin having a higher rigidity than that of the material of the pierceable part. The stopper body has an outer peripheral portion for preventing a stress from propagating to the outside when the pierceable part is pierced with the hollow needle and for defining the pierceable part. Further, the pierceable stopper has a thermowelded joint at which the pierceable part and the stopper body are thermowelded together.

According to the pierceable stopper producing method, the pierceable part, which has been molded, is heat-treated. The heat-treated pierceable part is inserted into an injection mold. A melt of the thermoplastic synthetic resin is injected into a cavity defined by the injection mold and the pierceable part at an injection pressure not lower than 59 MPa to mold the stopper body, and the pierceable part and the stopper body are thermowelded together in the injection mold to form the thermowelded joint.

### Brief Description of the Drawings:

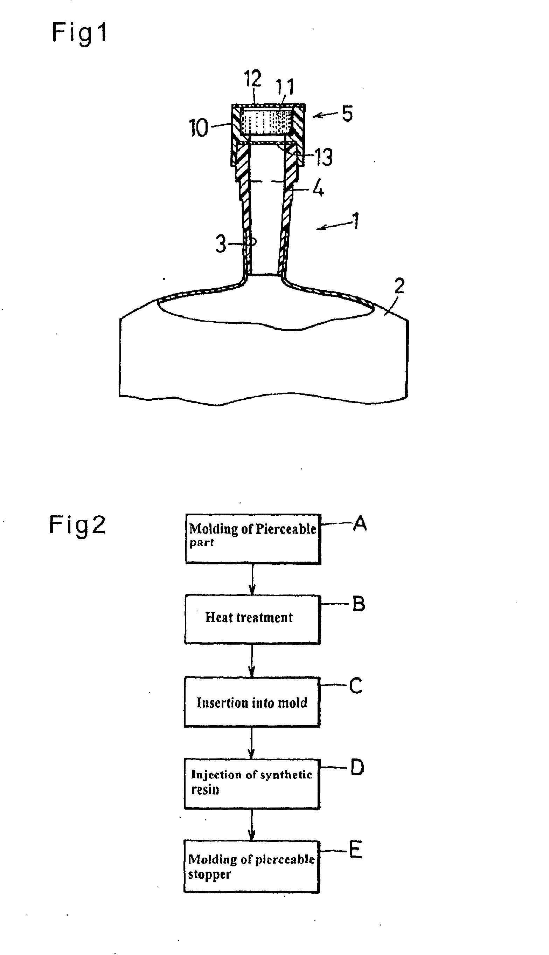

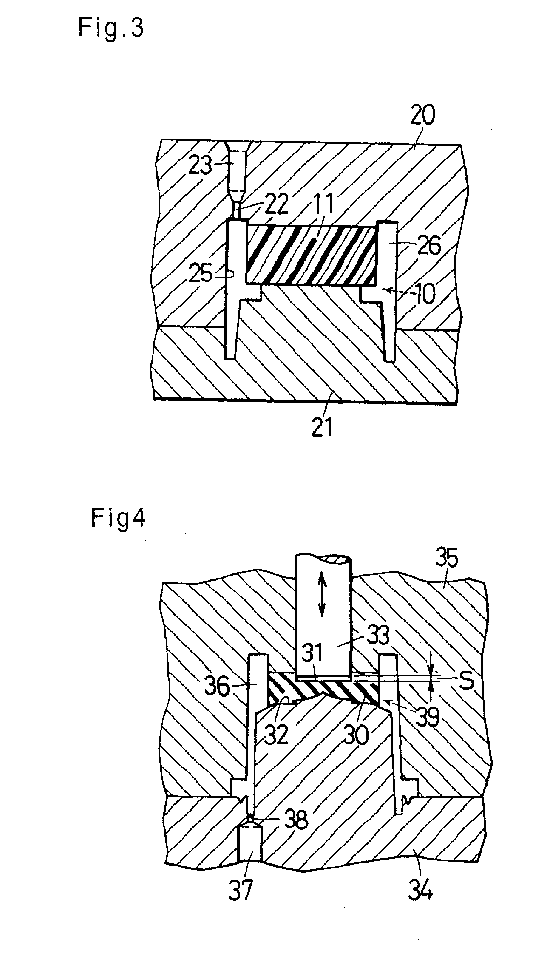

Fig. 1 is a sectional view of the pierceable stopper according to the present invention when it is applied to a medical liquid bag for intravenous drip infusion. Fig. 2 is a flowchart showing the process of producing the pierceable stopper, in which the pierceable part is heat-treated. Fig. 3 is a sectional view showing a mold for forming the pierceable stopper by injection molding process. Fig. 4 is a sectional view showing a mold for forming the pierceable stopper by injection molding process according to another embodiment.

### Best Mode for Carrying Out the Invention:

Embodiments of the present invention will be described below with reference to the accompanying drawings. Fig. 1 shows an example in which the pierceable stopper according to the present invention is applied to a medical liquid bag for intravenous drip infusion. The structure and function of this application example are publicly known and detailed in Japanese Patent No. 3142521, Japanese Patent Application Unexamined Publication (KOKAI) No. 2001-258991, and so forth. The application example will be outlined below with a view to facilitating the understanding of the present invention. A medical liquid container 1 for intravenous drip infusion has a container body 2 made of a film-shaped transparent synthetic resin material, e.g. polyethylene. The container body 2 contains a medical liquid.

The container body 2 has an opening 3 formed at the top thereof. One end of an annular connecting pipe is inserted into the opening 3. The opening 3 and the connecting pipe 4 are thermowelded together by ultrasonic welding or the like. One end of a pierceable stopper 5 is inserted into and connected to the upper end of the connecting pipe 4. The connecting pipe 4 and the pierceable stopper 5 are also thermowelded together by ultrasonic welding or other similar means.

The pierceable stopper 5 comprises a stopper body 10, a pierceable part 11, an external hermetic sealing film 12, and an internal hermetic sealing film 13. The external hermetic sealing film 12 is a kind of partition for preventing the pierceable part 11 and the outside air from coming into direct contact with each other. The internal hermetic sealing film 13 is a partitioning member provided to prevent the pierceable stopper 5 and the medical liquid in the container body 2 from coming into direct contact with each other and to maintain the airtightness of the container body 2. The internal hermetic sealing film 13 and the container body 2 are joined together by using a publicly known technique, e.g. thermowelding using ultrasonic waves or bonding using an adhesive.

The pierceable part 11 and the stopper body 10, which constitute the pierceable stopper 5, are formed by using different kinds of synthetic resin materials. The pierceable part 11 is disposed inside the stopper body 10 and secured thereto. The pierceable part 11 is positioned in the central portion of the stopper body 10. The stopper body 10 and the pierceable part 11 are integrally molded by an insert dissimilar material injection molding process (described later). The stopper body 10 is made of a thermoplastic synthetic resin having mechanical strength, e.g. polypropylene (PP), polyethylene (PE), ABS resin (ABS), polycarbonate (PC), or polyamide (PA).

It should be noted that a styrene elastomer is preferably used as a material for the pierceable part 11 as described later, and polypropylene (PP), polyethylene (PE) or ABS resin (ABS) is preferably used as a material for the stopper body 10 to allow the stopper body 10 to be thermowelded to the material of the pierceable part 11. As a material for the pierceable part 11, various thermoplastic synthetic resin elastic materials can be used. Thermoplastic synthetic resin elastic materials usable in the present invention include nylon, polyurethane, olefin, polyester and styrene elastomers having a JIS(A) hardness of 20 to 65 degrees, which is lower than the hardness of thermoplastic synthetic resins. One or more thermoplastic synthetic resin elastic materials are optionally selected from those mentioned above and used alone or in the form of a mixed elastomer.

If the JIS(A) hardness is less than 20, the material strength is weak, so that the pierceable part 11 is likely to tear when a hollow needle is inserted thereinto. If JIS(A) hardness of the measured value obtained with a durometer of the type A defined by JIS K6253 is more than 65 degrees, the material is excessively hard and offers a high resistance to penetration of the needle. Accordingly, operability is poor.

Among the thermoplastic synthetic resin elastic materials, styrene elastomers are particularly preferable. Typical styrene elastomers are hydrogenated products of SEBS (styrene-ethylene-butylene-styrene), SEPS (styrene-ethylene-propylene-styrene) and SEEPS (styrene-isoprene-butadiene-styrene) block copolymers. At least one of these styrene elastomers is used in this embodiment. Among the above-mentioned styrene elastomers, SEEPS highly-saturated hydrogenated styrene elastomers are preferable.

When a styrene elastomer is applied to the present invention, it is generally used in the form of a compound containing one or more of the above-mentioned SEBS, SEPS and SEEPS hydrogenated styrene elastomers as a base polymer. Raw materials to be compounded are mixed together roughly in the following compounding ratio:

| | | |
|---|---|---|
| (1) | SEBS, SEPS, SEEPS or a mixture thereof | 100 parts by weight |
| (2) | Paraffin oil | 50 to 300 parts by weight |
| (3) | Polyolefin resin | 10 to 50 parts by weight |

It should be noted that 50 to 40 parts by weight of an inorganic filler may be added to the materials (1) to (3) according to need. Styrene elastomers applicable to the present invention, i.e. (1) SEPS, SEBS, or a mixture thereof, are commercially available in the name of "Septon" (trademark) available from Kuraray Co., Ltd. (Japan), "Cleiton G (trademark) available from Cleiton Polymer Japan (Japan), and "Rabalon" (trademark) available from Mitsubishi Petro-Chemical Co., Ltd. (Japan). It is necessary to select a base polymer having a specific molecular weight from among these styrene elastomers. Paraffin oil usable as the above (2) is as follows.

Oils having a kinematic viscosity of 200 to 800 centistokes (cSt), preferably 500 to 600 cSt, at 40°C, and an ignition point (COC) of 200 to 400°C, preferably 250 to 350°C, are suitably used. Oils are, in general, mixtures of three, i.e. aromatic ring, naphthene ring, and paraffin chain, and classified as follows. An oil in which the number of carbon atoms present in the paraffin chains accounts for not less than 50% by weight of the total number of carbon atoms is referred. An oil in which the number of carbon atoms accounts for 30 to 45% by weight of the total number of carbon atoms is referred to as "naphthene oil". An oil in which the number of carbon atoms present in the aromatic rings accounts for not less than 30% by weight of the total number of carbon atoms is referred to as "aromatic oil".

If the pierceable part 11 is pierced with a hollow needle, there will be no leakage from a crack, tear or cut opening which may be made in a pierced portion thereof. When the pierceable part 11 is pierced with a hollow needle, a tear or an opening is formed therein by the wedge action of the needle. After the formation of the tear or opening in the pierceable part 11, the medical liquid in the container body 2 needs to be prevented from leaking out through the tear or the opening in a state where the needle is stuck into the pierceable part 11 or has been pulled out from it. The main reason for the leakage is presumed as follows. Penetration of the needle into the pierceable part 11 causes permanent set, more precisely, permanent compression set, to be formed around the opening made by the insertion of the needle. Consequently, the pierceable part 11 cannot elastically recover from the deformation, or even if it recovers, the pierceable part 11 cannot be ensured a sufficient elastic recovery force to close the opening.

That is, if the pierceable part 11 is ensured a sufficient elastic recovery force to close the tear or the opening, the leakage can be prevented. In the present invention, the problem of leakage is solved by subjecting the pierceable part 11 to a heat treatment, that is, a treatment for removing the internal stress. The internal stress disorders the dimensional accuracy of the product and also causes shrinkage, deformation and breakage. In particular, the internal stress unfavorably limits the elasticity required for the use application of the present invention.

The pierceable part 11 is molded from a thermoplastic synthetic resin elastic material filled in an injection mold. Because the thermoplastic synthetic resin elastic material is a material having rubber-like elasticity and forcedly filled into the injection mold, the pierceable part 11 has an orientation strain produced in the direction of flow of the material. The strain cannot be removed simply by removing the applied pressure. More specifically, because it is immediately cooled to solidify in the injection mold, the material cannot return to its original shape. Hence, the orientation strain remains in the form of residual stress (internal stress). According to the present invention, as shown in Fig. 2, step B of heat-treating the pierceable part 11 is added after step A of molding the pierceable part 11. That is, a heat treatment (annealing) is performed after the molding process to remove the residual stress.

The heat treatment exhibits the effect of preventing the leakage of liquid. More specifically, because the pierceable part 11 is heated again, the internal stress is resolved, and the orientation strain is relaxed. Consequently, the balance between the direction of flow of the material from the gate and the direction perpendicular to the material flow direction is bettered. Thus, the leakage of liquid is prevented effectively. That is, the ratio of MD (Machine Direction) to TD (Transverse direction) becomes close to 1. In the heat treatment, the pierceable part 11 is heated in an atmosphere of heated air at a temperature roughly in the range of from 80 to 120°C for a period of time in the range of from 30 minutes to 12 hours, although the heat-treating conditions depend on the kind of resin used. The heat treatment can be performed with a simple, common device, e.g. an oven.

Accordingly, the residual stress can be removed at a reduced cost without requiring costly equipment. By removing the strain, the elasticity of the material constituting the pierceable part 11 is recovered. As a result, the elastic recovery force of the pierceable part 11 is increased. Consequently, when the pierceable part 11 is pierced with a hollow needle or after the needle has been pulled out from it, the tear or cut opening made in the pierced portion thereof is closed by the enhanced elasticity of the material. Accordingly, there will be no leakage of medical liquid from the tear or the opening. In actual practice, a favorable result can be obtained by performing the heat treatment at a temperature in the range of from 100 to 120°C for a period of time in the range of from 1 to 2 hours. Subsequently, the pierceable part 11, which has been subjected to the removal of strain, is inserted into a mold for injection molding (C in Fig. 2).

After the pierceable part 11 has been placed in a predetermined position, a thermoplastic synthetic resin is injected into the mold to form a stopper body 10 (D in Fig. 2). Thus, a pierceable stopper 5 is formed (E in Fig. 2). A specific molding process of this process will be shown below with reference to Fig. 3. It should be noted that a forced moisture absorption treatment (moisture conditioning treatment) should desirably be carried out in combination with the heat treatment according to the kind of resin used. The forced moisture absorption treatment allows the dimensional stability and toughness to be maintained.

Fig. 3 shows a section of a mold assembly for injection mold. The heat-treated pierceable part 11 is inserted into the mold assembly for injection molding. The mold assembly is adapted to mold a stopper body 10 by injection molding to form a pierceable stopper 5. The mold assembly is formed from a stationary mold element 20 and a movable mold element 21. The stationary mold element 20 is provided with a gate 22 and a runner 23 communicating with the gate 22. When the stationary mold element 20 and the movable mold element 21 are in a closed position, a first cavity 25 is defined therebetween. The pierceable part 11, which has previously been molded and subjected to strain removal, is inserted into the first cavity 25.

Accordingly, a second cavity 26 is defined between the stationary mold element 20, the movable mold element 21 and the pierceable part 11. The second cavity 26 is a cylindrical space for forming the stopper body 10. A molten thermoplastic synthetic resin for forming the stopper body 10 is injected into the second cavity 26, thereby forming the stopper body 10. The molten thermoplastic synthetic resin forms the stopper body 10 while applying pressure to the pierceable part 11 from the outer periphery thereof. In other words, the pierceable stopper 5 is formed in a state where the pierceable part 11 is compressed.

As the injection pressure for the thermoplastic synthetic resin, such a pressure is applied as causes a larger amount of volume reduction than the amount of volume reduction caused by the natural shrinkage of a melt, a semi-melt or a solid due to a temperature drop. More specifically, the resin melt is injected at a pressure higher than the normal injection pressure regarded as the optimum injection condition for the thermoplastic synthetic resin. When the viscosity of the thermoplastic synthetic resin is high, the injection molding pressure is set at a slightly higher level. It is desirable that the thermoplastic synthetic resin melt should be injected at an injection pressure not lower than 59 MPa to form the stopper body 10.

Meanwhile, the stopper body 10 and the pierceable part 11 are thermowelded together in the injection mold by melting the surface of the thermoplastic synthetic resin elastic material of the pierceable part 11 with the heat of the molten thermoplastic synthetic resin for forming the stopper body 10. When the pierceable part 11 is pierced with a hollow needle, even if the pierced portion is cut open, the opening is closed by the elasticity recovered by the strain removal and an elastic recovery force derived from the compressive internal stress. Therefore, there is no possibility of leakage of the medical liquid from the container. In addition, the thermowelded joint prevents the leakage of liquid even more effectively.

### (Other Embodiments)

Fig. 4 is a sectional view showing a production process in a case where the pierceable part is different in shape from the above. In this example, a pierceable part 30 has a recessed portion 31. The pierceable part 30 is pressurized in such a manner as to be clamped at the outer periphery thereof by the pressure applied by the injected molten resin for forming a stopper body 39. Thus, the pierceable part 30 is compressed by the injection pressure. The mold structure will be described below. A previously molded pierceable part 30 has been inserted into a first cavity 32. A cylindrical slide core 33 has been inserted into the recessed portion 31 of the pierceable part 30.

The slide core 33 is movable into the recessed portion 31. The amount to which the slide core 33 projects into the recessed portion 31 is adjustable. A second cavity 36 is defined between a stationary mold element 34, a movable mold element 35 and the pierceable part 30 to form a space for forming the stopper body 39 in the same way as the above. In addition, a gap S is formed between the slide core 33 and the recessed portion 31 of the pierceable part 30 placed in the first cavity 32. A molten thermoplastic synthetic resin is injected into the second cavity 36 of the above-described mold structure through a runner 37 and a gate 38 under the same conditions as the above.

The pierceable part 30 is deformed by the compressive pressure of the injected resin to fill the gap S provided in the recessed portion 31 of the pierceable part 30. Therefore, when the pierceable stopper is removed from the mold after the injection molding process, the pierceable part 30 is elastically deformed, although the deformation is only slight. The recessed portion of the pierceable part 30 forms locally a readily deformable portion. Accordingly, when the pierceable part 30 is pierced with a hollow needle for intravenous drip infusion, the recessed portion 31 is deformed so as to surround the needle and to come in surface contact with the outer surface of the needle. Accordingly, the liquid is unlikely to leak. The pierceable part 30 having the recessed portion 31 should also be heated-treated before the stopper body 39 is formed by injection molding. By doing so, the above-described leak preventing effect is further enhanced.

It should be noted that containers to which the present invention is applicable are not limited to those of the type adapted to take out a liquid therefrom. The present invention is also applicable to containers of the type that a liquid is externally injected thereinto through a hollow needle.

### [Experimental Examples]

An experiment was carried out under the following conditions to confirm the performance of the pierceable stopper 5 produced according to the above-described first embodiment. The pierceable part 11 was formed by using a styrene elastomer as a base polymer, i.e. "Septon 4077" (trademark), available from Kuraray Co., Ltd. (consisting essentially of SEEPS and having a molecular weight of 300,000). The styrene elastomer was used in the form of a compound formed by kneading Septon 4077, a paraffin oil and polypropylene in the mixing ratio of 40:50:10 with a twin-screw extruder. The hardness of the pierceable part was 49 in terms of JIS(A) hardness.

The stopper body 10 was molded under the following molding conditions by using polypropylene (BC03C, available from Nippon Polychem Corp.) as a thermoplastic synthetic resin.

The injection molding conditions for the stopper body 10 were as follows. The injection temperature was 210°C, and the injection pressure was 78 MPa (800 kgf/cm²). The injection molding conditions for the pierceable part 11 were as follows. The injection temperature was 200°C, and the injection pressure was 49 MPa (500 kgf/cm²). The wall thickness of the pierceable part 11 was 4.8 millimeters. The heat-treating conditions were as follows. The resin temperature was 115°C, and the heating time was 1 hour or 8 hours.

Table 1 below shows the results of a liquid leakage test. In the test, each pierceable stopper was pierced with a plastic needle for intravenous drip infusion having a diameter of 4 millimeters, and left to stand for 1 hour or 5 hours under ordinary temperature conditions. Then, the condition of leakage after the removal of the needle was visually judged. The test was carried out 5 times for each of the test conditions concerning the period of time of piercing with the needle, i.e. 1 hour, and 5 hours.

**Table 1:**

| Results of Liquid Leakage Test | | | | | | |
|---|---|---|---|---|---|---|
| Period of time of piercing with needle | Heat-treating conditions | Test results (N=5) | | | | |
| 1 hour | Not heat-treated | Δ, | Δ, | Δ, | Δ, | Δ |
| | 115°C, 1 hour | ⓞ, | Δ, | ⓞ, | ⓞ, | ⓞ |
| | 115°C, 8 hours | ⓞ, | ⓞ, | ⓞ, | ⓞ, | ⓞ |
| 5 hours | Not heat-treated | Δ, | Δ, | Δ, | ×, | Δ |
| | 115°C, 1 hour | ⓞ, | Δ, | Δ, | ⓞ, | ⓞ |
| | 115°C, 8 hours | ⓞ, | ⓞ, | ⓞ, | ⓞ, | ⓞ |
| Notes: | | | | | | |
| ⓞ No leakage of liquid | | | | | | |
| Δ A little leakage of liquid | | | | | | |
| × Some leakage of liquid | | | | | | |

Table 2 below shows the results of the test carried out on pierceable stoppers produced under injection pressure and heat-treating conditions different from those for the pierceable stoppers in Table 1 under the same testing conditions as in the case of Table 1.

**Table 2:**

| Results of Liquid Leakage Test | | | | | | | |
|---|---|---|---|---|---|---|---|
| Period of time of piercing with needle | Heat-treating conditions | Injection pressure for stopper body | Test results (n=5) | | | | |
| 1 hour | 115°C | 39 MPa (Comp. Ex.) | ×, | ×, | Δ, | Δ, | Δ |
| | | 59 MPa (Example) | Δ, | ⓞ, | ⓞ, | ⓞ, | ⓞ |
| | 3 hours | 108 MPa (Example) | ⓞ, | ⓞ, | ⓞ, | ⓞ, | ⓞ |
| Notes: | | | | | | | |
| ⓞ No leakage of liquid | | | | | | | |
| Δ A little leakage of liquid | | | | | | | |
| × Some leakage of liquid | | | | | | | |

## Claims

1. A pierceable stopper comprising:
a pierceable part pierceable with a hollow needle, said pierceable part being formed by using a thermoplastic synthetic resin elastic material as a base polymer, said thermoplastic synthetic resin elastic material being a styrene elastomer consisting essentially of a hydrogenated product of a styrene-conjugated diene block copolymer having a weight-average molecular weight not less than 150,000, wherein said conjugated diene is at least one selected from isoprene and butadiene, said pierceable part having a hardness in a range of from 20 to 80 in terms of JIS(A) hardness and a thickness in a range of from 2 millimeters to 8 millimeters;
a stopper body formed from a thermoplastic synthetic resin having a higher rigidity than that of the material of said pierceable part, said stopper body having an outer peripheral portion for preventing a stress from propagating to an outside when said pierceable part is pierced with said hollow needle and for defining said pierceable part; and
a thermowelded joint at which said pierceable part and said stopper body are thermowelded together;
wherein said pierceable part, which has been molded, is heated to perform a heat treatment for removing an internal stress and then inserted into an injection mold, and a melt of the thermoplastic synthetic resin is injected into a cavity defined by said injection mold and said pierceable part at an injection pressure not lower than 59 MPa to mold said stopper body, and further, said pierceable part and said stopper body are thermowelded together in said injection mold to form the thermowelded joint.

2. A pierceable stopper according to claim 1, wherein said heat treatment is carried out for a period of time in a range of from 30 minutes to 12 hours by using heated air at a temperature of from 80 to 120°C.

3. A pierceable stopper according to claim 1 or 2, wherein said thermoplastic synthetic resin elastic material is a styrene elastomer consisting essentially of a hydrogenated product of a styrene-conjugated diene block copolymer having a weight-average molecular weight of from 270,000 to 400,000, wherein said conjugated diene is at least one selected from isoprene and butadiene.

4. A pierceable stopper according to claim 1 or 2, wherein said thermoplastic synthetic resin elastic material is a hydrogenated product of a styrene-isoprene-butadiene-styrene block copolymer having a weight-average molecular weight of from 270,000 to 400,000.

5. A pierceable stopper according to claim 4, wherein said pierceable part is formed from a mixture of said hydrogenated product of a styrene-isoprene-butadiene-styrene block copolymer, a paraffin oil, and a polyolefin resin.

6. A pierceable stopper according to claim 4, wherein said thermoplastic synthetic resin is at least one selected from polypropylenes, polyethylenes, and ABS resins.

7. A method of producing a pierceable stopper, said pierceable stopper having:
a pierceable part pierceable with a hollow needle, said pierceable part being formed by using a thermoplastic synthetic resin elastic material as a base polymer, said thermoplastic synthetic resin elastic material being a styrene elastomer consisting essentially of a hydrogenated product of a styrene-conjugated diene block copolymer having a weight-average molecular weight not less than 150,000, wherein said conjugated diene is at least one selected from isoprene and butadiene, said pierceable part having a hardness in a range of from 20 to 80 in terms of JIS(A) hardness and a thickness in a range of from 2 millimeters to 8 millimeters;
a stopper body formed from a thermoplastic synthetic resin having a higher rigidity than that of the material of said pierceable part, said stopper body having an outer peripheral portion for preventing a stress from propagating to an outside when said pierceable part is pierced with said hollow needle and for defining said pierceable part; and
a thermowelded joint at which said pierceable part and said stopper body are thermowelded together;
said method comprising the steps of heating said pierceable part, which has been molded, to perform a heat treatment for removing an internal stress; inserting said pierceable part, which has been heat-treated, into an injection mold; injecting a melt of the thermoplastic synthetic resin into a cavity defined by said injection mold and said pierceable part at an injection pressure not lower than 59 MPa to mold said stopper body; and thermowelding together said pierceable part and said stopper body in said injection mold to form the thermowelded joint.

8. A method of producing a pierceable stopper according to claim 7, wherein said heat treatment is carried out at a temperature of from 80 to 120°C for a period of time in a range of from 30 minutes to 12 hours.

9. A method of producing a pierceable stopper according to claim 7 or 8, wherein said thermoplastic synthetic resin elastic material for forming said pierceable part is a styrene elastomer consisting essentially of a hydrogenated product of a styrene-conjugated diene block copolymer having a weight-average molecular weight of from 270,000 to 400,000, wherein said conjugated diene is at least one selected from isoprene and butadiene.

10. A method of producing a pierceable stopper according to claim 7 or 8, wherein said thermoplastic synthetic resin elastic material for forming said pierceable part is a styrene elastomer consisting essentially of a hydrogenated product of a styrene-isoprene-butadiene-styrene block copolymer having a weight-average molecular weight of from 270,000 to 400,000.

11. A method of producing a pierceable stopper according to claim 10, wherein said thermoplastic synthetic resin for forming said stopper body is at least one selected from polypropylenes, polyethylenes, and ABS resins.

12. A pierceable stopper according to claim 10, wherein said pierceable part is formed from a mixture of said hydrogenated product of a styrene-isoprene-butadiene-styrene block copolymer, a paraffin oil, and a polyolefin resin.

## Amended claims

### Amended claims under Art. 19.1 PCT

**1.** A pierceable stopper comprising:
a pierceable part pierceable with a hollow needle, said pierceable part being formed by using a thermoplastic synthetic resin elastic material as a base polymer, said thermoplastic synthetic resin elastic material being a styrene elastomer consisting essentially of a hydrogenated product of a styrene-conjugated diene block copolymer having a weight-average molecular weight not less than 150,000, wherein said conjugated diene is at least one selected from isoprene and butadiene, said pierceable part having a hardness in a range of from 20 to 80 in terms of JIS(A) hardness and a thickness in a range of from 2 millimeters to 8 millimeters;
a stopper body formed from a thermoplastic synthetic resin having a higher rigidity than that of the material of said pierceable part, said stopper body having an outer peripheral portion for preventing a stress from propagating to an outside when said pierceable part is pierced with said hollow needle and for defining said pierceable part; and
a thermowelded joint at which said pierceable part and said stopper body are thermowelded together;
wherein said pierceable part, which has been molded, is heated to perform a heat treatment for removing an internal stress and then inserted into an injection mold, and a melt of the thermoplastic synthetic resin is injected into a cavity defined by said injection mold and said pierceable part at an injection pressure not lower than 59 MPa to mold said stopper body, and further, said pierceable part and said stopper body are thermowelded together in said injection mold to form the thermowelded joint.

**2.** A pierceable stopper according to claim 1, wherein said heat treatment is carried out for a period of time in a range of from 30 minutes to 12 hours by using heated air at a temperature of from 80 to 120°C.

**3.** A pierceable stopper according to claim 1 or 2, wherein said thermoplastic synthetic resin elastic material is a styrene elastomer consisting essentially of a hydrogenated product of a styrene-conjugated diene block copolymer having a weight-average molecular weight of from 270,000 to 400,000, wherein said conjugated diene is at least one selected from isoprene and butadiene.

**4.** A pierceable stopper according to claim 1 or 2, wherein said thermoplastic synthetic resin elastic material is a hydrogenated product of a styrene-isoprene-butadiene-styrene block copolymer having a weight-average molecular weight of from 270,000 to 400,000.

**5.** A pierceable stopper according to claim 4, wherein said pierceable part is formed from a mixture of said hydrogenated product of a styrene-isoprene-butadiene-styrene block copolymer, a paraffin oil, and a polyolefin resin.

**6.** (Amended) A pierceable stopper according to claim 4, wherein said thermoplastic synthetic resin is at least one selected from polypropylenes and polyethylenes.

**7.** A method of producing a pierceable stopper, said pierceable stopper having:
a pierceable part pierceable with a hollow needle, said pierceable part being formed by using a thermoplastic synthetic resin elastic material as a base polymer, said thermoplastic synthetic resin elastic material being a styrene elastomer consisting essentially of a hydrogenated product of a styrene-conjugated diene block copolymer having a weight-average molecular weight not less than 150,000, wherein said conjugated diene is at least one selected from isoprene and butadiene, said pierceable part having a hardness in a range of from 20 to 80 in terms of JIS(A) hardness and a thickness in a range of from 2 millimeters to 8 millimeters;
a stopper body formed from a thermoplastic synthetic resin having a higher rigidity than that of the material of said pierceable part, said stopper body having an outer peripheral portion for preventing a stress from propagating to an outside when said pierceable part is pierced with said hollow needle and for defining said pierceable part; and
a thermowelded joint at which said pierceable part and said stopper body are thermowelded together;
said method comprising the steps of heating said pierceable part, which has been molded, to perform a heat treatment for removing an internal stress; inserting said pierceable part, which has been heat-treated, into an injection mold; injecting a melt of the thermoplastic synthetic resin into a cavity defined by said injection mold and said pierceable part at an injection pressure not lower than 59 MPa to mold said stopper body; and thermowelding together said pierceable part and said stopper body in said injection mold to form the thermowelded joint.

**8.** A method of producing a pierceable stopper according to claim 7, wherein said heat treatment is carried out at a temperature of from 80 to 120°C for a period of time in a range of from 30 minutes to 12 hours.

**9.** A method of producing a pierceable stopper according to claim 7 or 8, wherein said thermoplastic synthetic resin elastic material for forming said pierceable part is a styrene elastomer consisting essentially of a hydrogenated product of a styrene-conjugated diene block copolymer having a weight-average molecular weight of from 270,000 to 400,000, wherein said conjugated diene is at least one selected from isoprene and butadiene.

**10.** A method of producing a pierceable stopper according to claim 7 or 8, wherein said thermoplastic synthetic resin elastic material for forming said pierceable part is a styrene elastomer consisting essentially of a hydrogenated product of a styrene-isoprene-butadiene-styrene block copolymer having a weight-average molecular weight of from 270,000 to 400,000.

**11.** (Amended) A method of producing a pierceable stopper according to claim 10, wherein said thermoplastic synthetic resin for forming said stopper body is at least one selected from polypropylenes and polyethylenes.

**12.** A pierceable stopper according to claim 10, wherein said pierceable part is formed from a mixture of said hydrogenated product of a styrene-isoprene-butadiene-styrene block copolymer, a paraffin oil, and a polyolefin resin.

Statement under Art. 19.1 PCT
Claims 6 and 11 have been amended to change "said thermoplastic synthetic resin is at least one selected from polypropylenes, polyethylenes, and ABS resins" to --said thermoplastic synthetic resin is at least one selected from polypropylenes and polyethylenes--, thus deleting the recitation of "ABS resins". The purpose of the amendment is to delete "ABS resins" because ABS resins are not readily thermoweldable to the "thermoplastic synthetic resin elastic material being a styrene elastomer".
